Europäisches Patentamt

(19) European Patent Office    (11) Publication number: **0 127 444**

Office européen des brevets                         **B1**

(12)            **EUROPEAN PATENT SPECIFICATION**

(45) Date of publication of patent specification: **21.01.87**    (51) Int. Cl.⁴: **G 11 B 17/02**

(21) Application number: **84303511.4**

(22) Date of filing: **24.05.84**

(54) **Lubricant film coated magnetic disks.**

(30) Priority: **26.05.83 JP 93557/83**
**26.05.83 JP 93558/83**
**30.05.83 JP 96688/83**
**30.06.83 JP 120097/83**
**30.06.83 JP 120098/83**

(43) Date of publication of application:
**05.12.84 Bulletin 84/49**

(45) Publication of the grant of the patent:
**21.01.87 Bulletin 87/04**

(84) Designated Contracting States:
**DE FR GB IT**

(56) References cited:
**EP-A-0 020 933**
**DE-B-2 905 413**
**GB-A-2 051 458**
**US-A-3 719 525**
**US-A-4 188 434**
**US-A-4 339 777**

(73) Proprietor: **FUJITSU LIMITED**
**1015, Kamikodanaka Nakahara-ku**
**Kawasaki-shi Kanagawa 211 (JP)**

(72) Inventor: **Sawada, Shigetomo c/o Fujitsu**
**Limited**
**Patent Department 1015 Kamikodanaka**
**Nakahara-ku**
**Kawasaki-shi Kanagawa 211 (JP)**
Inventor: **Hinobayashi, Takeo c/o Fujitsu**
**Limited**
**Patent Department 1015 Kamikodanaka**
**Nakahara-ku**
**Kawasaki-shi Kanagawa 211 (JP)**

(74) Representative: **Sunderland, James Harry et al**
**HASELTINE LAKE & CO Hazlitt House 28**
**Southampton Buildings Chancery Lane**
**London WC2A 1AT (GB)**

**Description**

The present invention relates to magnetic disk storage apparatus using magnetic disks coated with lubricant films to prevent the disks from friction damage.

The main file for an information processing system is usually provided by a large capacity magnetic disk storage with a high areal density. Recently, air-tight, dust free enclosures for magnetic disk driving assemblies have been used in order to achieve high reliability and maintenance free operation (DE—A—2905413).

Usually a magnetic disk driving assembly has a flying head. During starting up of rotation of magnetic disks of the assembly, (before starting, the flying heads rest on the surfaces of the disks) and during landing of the flying heads onto the disk surfaces, there is sliding friction between the flying heads and the surfaces of the disks (this type of operation of the disk device is called the 'contact start stop' CSS system).

On the other hand, to achieve higher recording densities, thinner recording medium films are formed by vacuum sputtering or plating technology on magnetic disks. To protect the thin recording medium films from wear by sliding friction and also to reduce wear of the magnetic heads, lubricant is indispensable.

Usually, a lubricant film is provided in advance on the surface of a disk. Solid or liquid materials having excellent lubricating ability, such as higher fatty acids, esters of higher fatty acids, higher alcohols, ether compounds, fluorides of these, and so on, are used as lubricant material (US—A—3719525, US—A—4188434).

In a magnetic disk driving assembly with an air-tight enclosure, a rise in temperature up to around 60 to 70°C is usual and possibly unavoidable. Heat is generated inside the enclosure of the assembly due to 'windage loss', generated by friction losses of an air layer near the rotating magnetic disks at high rotating speeds (3000 to 6000 revolutions per minute). The temperature of the disks is usually the highest; being slightly higher than that of other portions of the assembly. This high temperature accelerates evaporation of lubricant film formed on the disks.

In addition, a lower flying height of a magnetic head; namely, a small spacing between the magnetic recording medium and a magnetic head slider, is required if recording density is to be enhanced. For higher recording densities the thickness of a lubricant film on a magnetic disk cannot be ignored, being required to be as small as 100A° for example. Such a thin lubricant film can be exhausted easily by evaporation, at the high temperature mentioned above, in a short operating time, especially for magnetic disks of high recording density. If the film is exhausted, the stored information in the disks can be damaged due to friction between the head slider and the magnetic recording medium. Furthermore, the wear durability of the head slider is unsatisfactory.

According to the present invention there is provided magnetic disc storage apparatus, having a magnetic storage disk in an airtight enclosure, with a lubricant layer on the disk,

wherein a lubricant evaporation source is provided inside the enclosure, to fill the enclosure with vapour to suppress loss of lubricant from the disk.

According to the present invention there is provided a method for suppressing the consumption of a lubricant layer coated on a magnetic storage disk held rotatably by a rotating means in an airtight enclosure, comprising:

arranging a lubricant evaporation source inside air-tight enclosure;

rotating the magnetic disk by the rotating means, resulting in a rise in temperature inside the air-tight enclosure due to windage loss;

evaporating the lubricant material of the lubricant evaporation source and filling the inside of the air-tight enclosure with the lubricant vapour; and

suppressing the consumption of the lubricant layer coated on the magnetic disk, the evaporation of the lubricant material of the lubricant layer coated on the magnetic disk being substantially balanced by adsorption of the lubricant vapour filling the air-tight enclosure.

An embodiment of the present invention can provide a substantially maintenance-free and reliable magnetic disk storage.

If the space inside the enclosure is filled with lubricant vapour, evaporation of the lubricant from the lubricant film on a disk will be much suppressed and the time taken to consume the lubricant film on the disk will be prolonged. The higher the vapour pressure is, the greater the suppression effect.

The evaporation rate of the lubricant increases exponentially with the temperature and is also enhanced by turbulent air flow striking the evaporation surface. Considering these phenomena, lubricant sources of various types are proposed for use in embodiments of the present invention.

In order to provide sufficient quantity of lubricant vapour to suppress evaporation of the lubricant film on a disk, the temperature of the lubricant evaporating source is desirably as high as possible. Also the total effective area of the evaporation surface of the source should be as large as possible. It is more effective to expose the evaporation surface of the source to circulating hot air flow induced by the rotation of the magnetic disks.

Sometimes the lubricant film on a disk is composed of lubricant materials of two or more kinds. In this case, that material of the highest evaporation rate should be selected as the material of the lubricant evaporation source.

The effect of stabilization of the lubricant film on a disk is confirmed by some running tests on disk storage embodying the present invention, as described below.

Reference is made, by way of example, to the accompanying drawings, in which:-

Figure 1 is a schematic cross-sectional elevational view of magnetic storage apparatus embodying the present invention, having a lubricant evaporation source in the path of a hot air flow circulating in the apparatus when it is in use;

Figure 2 is a schematic cross-sectional elevational view of magnetic storage apparatus embodying the present invention, having a lubricant evaporation source on an inner wall surface of an air-tight enclosure of the apparatus;

Figure 3 is a schematic cross-sectional elevational view of magnetic storage apparatus embodying the present invention, having a lubricant evaporation source on a dummy surface of a magnetic disk; and

Figures 4(a), (b), (c) and (d) are schematic enlarged partial cross-sectional views of respective structures of lubricant evaporation sources that can be employed in embodiments of the present invention.

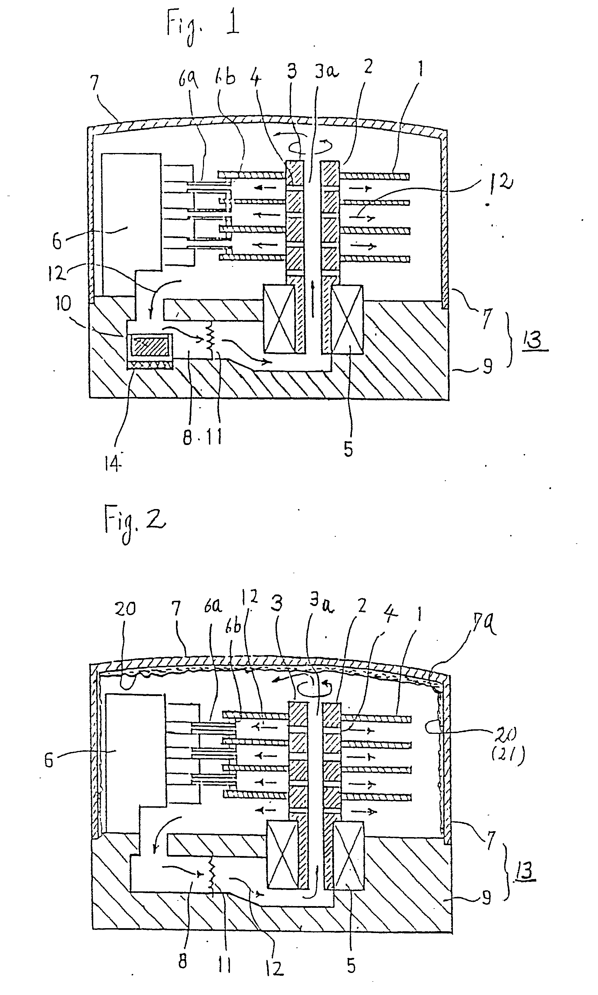

In the apparatus of Figure 1, magnetic disks 1 are coated with films of lubricant material such as myristic acid, a kind of higher fatty acid, of a thickness of 70A°. Several magnetic disks 1 are held in parallel at fixed spacings by hub means 2 fitting a spindle 3 of a rotating mechanism 5 positioned on a base structure 9. The spindle 3 has a hollow cylindrical space 3a along its center axis and a plurality of side holes 4 are formed radially in planes perpendicular to the center axis of the spindle 3 — one plane for each disk (in Figure 1, for each disk there are six holes, separated by angles of 60 degrees around the centre axis: 24 holes in total). The side holes 4 are connected to the hollow cylindrical space 3a and are open at the outer surface of the spindle 3. In the base structure 9, a hollow path or duct 8 is provided and the hollow cylindrical space 3a, side holes 4 and the path 8 make up a circulation path for a hot air flow 12 produced by fast rotation of the disks 1, to cool the hot air by circulation. A filter 11 is positioned in the path of the hot air flow to filter out any dust particles. Four head assemblies 6a, each having two flying heads 6b, are mounted on an actuator 6 for positioning each flying head precisely and quickly. All the devices described above are contained by an air-tight container 7, forming an enclosure 13 for the head disk assembly together with a base structure 9.

A lubricant evaporation source is provided inside the enclosure 13 to fill the inside of the enclosure with lubricant vapour having sufficient vapour pressure to suppress evaporation of the lubricant films on the magnetic disks 1.

Various types of lubricant evaporation source, differently located in the enclosure 13, of different surface structures and of different lubricant material can be used. Some possibilities will now be described.

Embodiment 1: referring to Figure 1.

A lubricant evaporation source 10 is positioned in the path of hot air circulation flow 12. The evaporation of the lubricant material from the surface of the source is much increased by turbulent air flow striking that surface.

The lubricant material may be coated or simply placed on a surface of a base plate of a dish-shaped or box-shaped lubricant container.

Alternatively, it can be impregnated into a sintered glass powder plate or embedded in small pots (pits) formed on (in) the base plate, for example.

In a thermally steady operating state, the temperature inside the enclosure rises to 60 to 70°C, but the temperature of the disk 1 is usually the highest. So, by providing a heating means 14, such as an electric heater, to heat up the source 10, higher vapour pressure of the lubricant inside the enclosure 13 is obtained, and rapid evaporation of the lubricant from the disk 1 surface is suppressed effectively. A temperature controller may be used for the heater, for example with a thermo-sensor.

Embodiment 2: referring to Figure 2.

A lubricant evaporation source 20 is located on an inside wall 7a of the air-tight container 7. A large evaporation surface area can be obtained. The temperature usually observed is not so low, for example 60 to 70°C. Furthermore, in order to increase the effective evaporation surface area of the source, a rough surface can be provided for the inside wall 7a, for example by some method such as sand blasting, machining and the like. A porous surface for the inside wall 7a can also be used for this purpose. A porous surface can be obtained by sintering metal powders, glass powders etc on the inside wall 7a, as will be described below.

When a porous layer 21 is formed to provide an evaporation surface for the lubricant of the source 20, it serves also as a container for the lubricant; the lubricant can be impregnated into the porous layer 21 by an immersion or deposition method or the like. A better adherence of the lubricant is obtained in this way, in comparison to a simple deposition or coating of the lubricant film on the inside wall 7a.

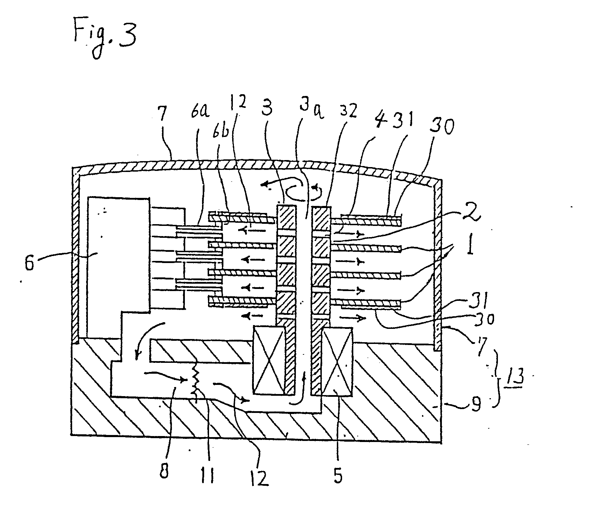

Embodiment 3: referring to Figure 3.

For accelerating the evaporation of the lubricant stored in a lubricant evaporation source, it is effective to locate the source on a disk or a plane which is rotated together with the magnetic disks 1 by the rotating means. The rotating surface is heated by windage loss induced by friction of its neighbouring air layer and the rapidly rotating evaporation surface. This accelerates evaporation of the lubricant from the source.

Usually, in a magnetic disk storage, there are provided 'dummy disk surfaces' 31. These surfaces are usually the top and bottom surfaces of the top and bottom disks 1 stacked on the hub means 2. They are not used for recording because of unstable movement of the flying heads. Lubricant evaporation sources 30

3

can be located on such dummy disk surfaces 31. Of course, a source 30 can be located on other rotating surfaces, such as a portion of a surface 32 of the hub means 2, or a rotating plane specially provided for the source (not shown in the Figures) attached to the rotating hub means 2 or the spindle 3 directly.

In contrast to the other magnetic disk surfaces which are used for recording, the thickness of the lubricant layer of the source is not limited, because the source is not involved in high density recording. Thus, the source can provide a sufficient reserve of lubricant to suppress the exhaustion of lubricant films on the magnetic disks 1 for a long operation time.

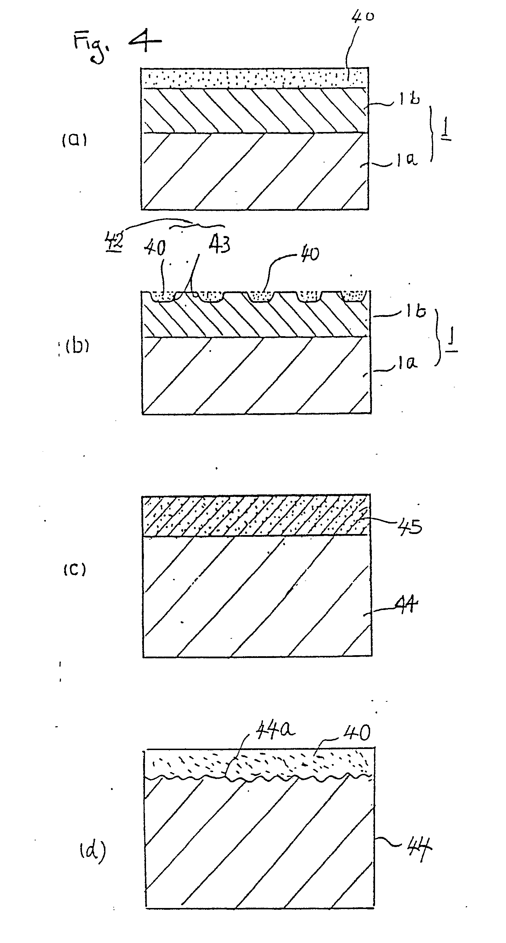

Figures 4(a) to 4(d) show enlarged cross-sectional views illustrating possible structures of lubricant evaporation sources.

The simplest lubricant evaporation source structure is shown in Figure 4(a). On a source base plate (e.g. a magnetic disk 1 (dummy disk surface) comprising a disk core 1a and recording medium 1b) a layer of the lubricant material 40 is formed by a spin coating, a vapourizing or a spraying method or the like.

Other structures can be used which offer increased effective evaporation surface areas or profiles and afford the lubricant material with good adhesion to source base plates. In practice, adhesion of the lubricant material to the base plate of the source is very important factor, especially if the base plate is rotating rapidly.

The following structures can be applied to any of lubricant evaporation sources employed in embodiments of the present invention.

In Figure 4(b), as a base plate, a magnetic medium layer 1b formed on a disk plate core 1a is used in this example. Many shallow pits 43 of around 30 μm diameter and 2 μm depth are formed on the magnetic medium layer 1b by conventional lithographic technology, with a density of around 2000 pits/cm². Myristic acid 40 is packed into these pits 43 forming a lubricant layer 42 having a strong adhesion to the base plate 1b.

In Figure 4(c), a porous surface is formed on a base plate 44. There are several methods of forming the porous surface. A porous glass layer 45, shown in the Figure, can be formed by coating glass resin, No. 150 glass resin manufactured by the Owens-Illinois Co., for example, and baking it in a furnace. The lubricant material can be easily impregnated into the porous glass layer 45. For example, myristic acid diluted by xylene is easily absorbed into the pores in the layer 45, and by evaporating the xylene, myristic acid of 0.13 mg/100cm² (this corresponds to a thickness of around 150A°), is impregnated into the porous layer 45. Apparently, the porous structure provides the lubricant material with large evaporation area and strong adhesion to the base plate.

Instead of glass resin, other powder materials such as metal powder or plastic powder are available for forming a sintered porous layer for this purpose.

Further an originally porous material such as a plastic sponge can be used as an impregnation layer for the lubricant of the source.

In Figure 4(d), still another structure of the lubricant evaporating source is illustrated. A base plate 44 is worked so as to have a rough surface 44a by a sand blasting method or some other machining method. An effect similar to that achieved with a porous surface can be expected.

In the above described embodiments, it has be implicitly assumed that the lubricant material coated on the magnetic disks is a single material and the same as the lubricant material of the lubricant evaporation source.

However, there are some cases where the lubricant film on magnetic disks comprises two or more layers of different lubricants, or contains a mixture of two or more different lubricants. As described before, lubricants of various types are usable. One group of these lubricants includes several higher fatty acids such as myristic acid, stearic acid and behenic acid and the esters of higher fatty acids such as myristan, stearin, etc. These are volatile lubricants having excellent lubricating capability but high evaporating rates. On the other hand, there is another group of lubricants including higher fatty acids such as cerotic acid, montanic acid etc, and silicon oils. These have high thermal stability but lower lubricating capabilities. A lubricant layer obtaining by laminating or mixing lubricants belonging to these two groups is stable at higher temperatures such as 60 to 70°C and also has high lubricating capability.

In such a case, the lubricant having the highest evaporation rate at operating temperature should be used selectively as the material of the lubricant evaporation source.

In the embodiments described above, the lubricant vapour may deposit itself on surfaces inside the air-tight container other than those of magnetic disks, such as the surfaces of hubs, magnetic heads and so on. However, the quantity of lubricant so deposited is so small that no problems occur and operations are performed well. For example, assuming that myristic acid is used as the lubricant, its saturated vapour pressure at 70°C is estimated to be $1 \times 10^{-4}$ mmHg (0,013 Pa). This means a space of 1000 CC contains 0.0013 mg of myristic acid. Further, on the inside surface of an enclosure of area 100 CM², 0.019 mg of myristic acid is adsorbed. In such small quantities, the lubricant does not affect operations.

Some experimental results obtained by the inventors will be described.

Three devices (A, B and C) embodying the present invention were used. These devices were magnetic disk storages as shown in Figure 3, with a dummy magnetic disk surface coated with porous glass layer impregnated with the lubricant material used as a lubricant evaporation source. One prior art device (D) having no lubricant evaporation source was used.

The same lubricant material was used for the lubricant layer on the magnetic disks and for the

4

# 0 127 444

evaporation source in devices A, B and C. The lubricant materials used were myristic acid (1), behenic acid (2) and stearin (3). The devices A to D were run at the same time. The friction co-efficients between the sliding magnetic head and the magnetic disk under test were measured before and after test running by a modified testing method according to ISO-DIS 7298. During running of the storage devices, starting up and landing of the flying magnetic heads were carried out every 4 to 8 hours to observe the lubrication conditions. The testing disk temperature was estimated to be 70°C being the highest in practice.

The experimental results are summarized in the Table 1. Test runs are identified by the combination of devices A, B, C, D and lubricant material 1, 2, 3 used.

Table 1

| lubricant | experiment number | operating time (Hr.) | friction co-efficient | |
|---|---|---|---|---|
| | | | before test | after test |
| myristic acid | A-1 | 160 | 0.22 | 0.21 |
| | B-1 | 160 | 0.22 | 0.22 |
| | C-1 | 160 | 0.22 | 0.22 |
| | D-1 | 8 | 0.22 | >0.4 |
| behenic acid | A-2 | 165 | 0.25 | 0.26 |
| | B-2 | 160 | 0.25 | 0.26 |
| | C-2 | 160 | 0.25 | 0.27 |
| | D-2 | 12 | 0.25 | >0.4 |
| stearin | A-3 | 160 | 0.18 | 0.20 |
| | B-3 | 160 | 0.18 | 0.19 |
| | C-3 | 160 | 0.18 | 0.18 |
| | D-3 | 8 | 0.18 | >0.4 |

The friction co-efficient after the test running for the prior art device increased rapidly to more than 0.4 within only 8 hours. On the other hand, with the devices according to the present invention, the friction co-efficient showed little difference between the start and the end of the test running. This tendency was the same regardless of the type of lubricant material used.

Other experiments were performed with a magnetic disk storage device (E) as shown in Figure 2, wherein the inner wall of the air-tight container is utilized as a base plate for a lubricant source. For these exponents, a glass porous layer was formed on the inner wall, and the lubricant material impregnated into the layer. In the same way as for the experiments described above, test running was performed and the results obtained as summarized in Table 2. The prior art unit with no lubricant evaporating source is denoted by D as before. For these experiments, myristin (4), an ester of myristic acid was also used.

Table 2

| lubricant | experiment number | operating time (Hr.) | friction co-efficient | |
|---|---|---|---|---|
| | | | before test | after test |
| myristic acid | E-1 | 100 | 0.22 | 0.21 |
| | D-1 | 8 | 0.22 | >0.4 |
| stearin | E-3 | 90 | 0.18 | 0.19 |
| | D-3 | 8 | 0.18 | >0.4 |
| myristin | E-4 | 100 | 0.16 | 0.16 |
| | D-4 | 8 | 0.16 | >0.4 |

It can be concluded from the results tabulated in the Table 1 and Table 2, that the provision of a lubricant evaporation source is effective to stabilize the lubricant layers formed on magnetic disks and to provide a highly reliable magnetic disk storage. Similar results were obtained with magnetic disk storage having lubricant evaporation sources of other types as shown in Figure 1.

5

**Claims:**

1. Magnetic disk storage apparatus, having a magnetic storage disk in an air-tight enclosure, with a lubricant layer on the disk,

wherein a lubricant evaporation source is provided inside the enclosure, to fill the enclosure with vapour to suppress loss of lubricant from the disk.

2. Apparatus as claimed in claim 1, wherein said lubricant evaporation source is placed with a lubricant evaporation surface thereof exposed to a hot air flow produced by disk rotation so that evaporation of lubricant contained in the lubricant evaporation source is enhanced.

3. Apparatus as claimed in claim 1, wherein said lubricant evaporation source is positioned in a base structure of the apparatus which together with a container forms the enclosure.

4. Apparatus as claimed in claim 1, wherein said lubricant evaporation source is formed on the surface of an inner wall of a container which together with a base structure forms the enclosure.

5. Apparatus as claimed in any preceding claim, further comprising:

heating means for heating the lubricant evaporating source.

6. Apparatus as claimed in claim 5, further comprising:

a temperature controller with a thermo-sensor arranged for controlling the temperature of the lubricant evaporation source.

7. Apparatus as claimed in claim 1, wherein said lubricant evaporation source is formed on a dummy surface of a magnetic storage disk, which surface has no recording function.

8. Apparatus as claimed in claim 1, further comprising a rotating member arranged to be rotated by rotation driving means of the apparatus, the said lubricant evaporation source being formed on a surface of the rotating member.

9. Apparatus as claimed in any preceding claim, wherein the lubricant layer coated on the magnetic storage disks comprise a laminated layer structure or a mixture of lubricants of two or more kinds, and the lubricant evaporation source contains that one of the lubricants on the disk having the highest evaporation rate.

10. Apparatus as claimed in any preceding claim, wherein the lubricant material of the lubricant evaporation source is coated on a surface of a source base plate, which surface is rough, or is a porous surface and is impregnated by the lubricant material.

11. Apparatus as claimed in claim 10, wherein the said porous surface is provided by a porous layer the main material of which is glass.

12. Apparatus as claimed in claim 11, wherein the porous layer is obtained by sintering a resin containing glass powders coated on the said surface of the source base plate.

13. Apparatus as claimed in any preceding claim, wherein the lubricant material of the lubricant evaporation source is the same as that of the disk lubricant layers.

14. A method for suppressing the consumption of a lubricant layer coated on a magnetic storage disk held rotatably by a rotating means in an air-tight enclosure, comprising:

arranging a lubricant evaporation source inside the air-tight enclosure;

rotating the magnetic disk by the rotating means, resulting in a rise in temperature inside the air-tight enclosure due to windage loss;

evaporating the lubricant material of the lubricant evaporation source and filling the inside of the air-tight enclosure with the lubricant vapour; and

supressing the consumption of the lubricant layer coated on the magnetic disk, the evaporation of the lubricant material of the lubricant layer coated on the magnetic disk being substantially balanced by adsorption of the lubricant vapour filling the air-tight enclosure.


**Patentansprüche**

1. Magnetplattenspeichervorrichtung, mit einer magnetischen Speicherplatte in luftdichtem Einschluß, mit einer Schmiermittelschicht auf der Platte,

bei welcher eine Schmiermittelverdampfungsquelle innerhalb des Einschlusses vorgesehen ist, um den Einschluß mit Dampf zu füllen, um den Verlust von Schmiermittel von der Platte zu unterdrücken.

2. Vorrichtung nach Anspruch 1, bei welcher die genannte Schmiermittelverdampfungsquelle mit einer Schmiermittelverdampfungsoberfläche derselben einen Heißluftstrom, der durch die Plattenrotation erzeugt wird, ausgesetzt plaziert ist, so daß die Verdampfung des Schmiermittels, welches in der Schmiermittelverdampfungsquelle enthalten ist, verstärkt wird.

3. Vorrichtung nach Anspruch 1, bei welcher die genannte Schmiermittelverdampfungsquelle in einer Basisstruktur der Vorrichtung positioniert ist, welche zusammen mit einem Behälter den Einschluß bildet.

4. Vorrichtung nach Anspruch 1, bei welcher die genannte Schmiermittelverdampfungsquelle auf der Oberfläche einer inneren Wand eines Behälters gebildet ist, der zusammen mit der Basisstruktur den Einschluß bildet.

5. Vorrichtung nach einem der vorhergehenden Ansprüche, ferner mit: Heizeinrichtungen zum Heizen der Schmiermittelverdampfungsquelle.

6

6. Vorrichtung nach Anspruch 5, ferner mit:

einem Temperaturregler mit einem Thermosensor, der zur Regelung der Temperatur der Schmiermittelverdampfungsquelle angeordnet ist.

7. Vorrichtung nach Anspruch 1, bei welcher die genannte Schmiermittelverdampfungsquelle auf einer blinden Oberfläche der magnetischen Speicherplatte angeordnet ist, welche Oberfläche keine Aufzeichnungsfunktion hat.

8. Vorrichtung nach Anspruch 1, ferner mit einem rotierenden Teil, welches angeordnet ist, um durch die Rotationsantriebseinrichtung der Vorrichtung rotiert zu werden, wobei die Schmiermittelverdampfungsquelle auf einer Oberfläche des rotierenden Teils gebildet ist.

9. Vorrichtung nach einem der vorhergehenden Ansprüche, bei welcher die Schmiermittelschicht, die auf den magnetischen Speicherplatten überzogen ist, eine laminierte Schichtstruktur oder eine Mischung von Schmiermitteln von zwei oder mehr Arten umfaßt, und die Schmiermittelverdampfungsquelle dasjenige der Schmiermittel auf der Platte enthält, welches die höchste Verdampfungsrate hat.

10. Vorrichtung nach einem der vorhergehenden Ansprüche, bei welcher das Schmiermittelmaterial der Schmiermittelverdampfungsquelle auf einer Oberfläche einer Quellenbasisplatte überzogen ist, welche Oberfläche rauh ist, oder eine poröse Oberfläche ist und mit dem Schmiermittelmaterial imprägniert ist.

11. Vorrichtung nach Anspruch 10, bei welcher die genannte poröse Oberfläche durch eine poröse Schicht gebildet ist, deren Hauptmaterial Glas ist.

12. Vorrichtung nach Anspruch 11, bei welcher die poröse Schicht durch Sintern eines Harzes, welches Glaspulver enthält, das auf der hauptoberfläche der Quellenbasisplatte überzogen ist, erhalten wird.

13. Vorrichtung nach einem der vorhergehenden Ansprüche, bei welcher das Schmiermittelmaterial der Schmiermittelverdampfungsquelle dasselbe ist wie dasjenige der Plattenschmiermittelschichten.

14. Verfahren zur Unterdrückung des Verbrauchs von einer Schmiermittelschicht, die auf einer magnetischen Speicherplatte überzogen ist, welche durch eine Rotationseinrichtung rotierbar in einem luftdichten Einschluß gehalten wird, mit:

Anordnung einer Schmiermittelverdampfungsquelle innerhalb des luftdichten Einschlusses;

Rotation der Magnetplatte durch die Rotationseinrichtung, mit dem Resultat eines Temperaturanstiegs innerhalb des luftdichten Einschlusses aufgrund von Ventilationsverlust;

Verdampfen des Schmiermittelmaterials der Schmiermittelverdampfungsquelle und Füllen des Inneren des luftdichten Einschlusses mit dem Schmiermitteldampf; und

Unterdrücken des Verbrauchs der Schmiermittelschicht, die auf der Magnetplatte überzogen ist, wobei die Verdampfung des Schmiermittelmaterials der auf der magnetischen Platte überzogenen Schmiermittelschicht im wesentlichen durch Absorption des Schmiermitteldampfes, welches den luftdichten Einschluß füllt, ausgeglichen wird.

**Revendications**

1. Appareil à mémoire à disques magnétiques, ayant un disque de mémoire magnétique dans une enceinte hermétique, avec une couche lubrifiante sur le disque,

dans lequel une source d'évaporation de lubrifiant est disposée dans l'enceinte afin que celle-ci soit remplie de vapeur et supprime les pertes de lubrifiant provenant du disque.

2. Appareil selon la revendication 1, dans lequel la source d'évaporation de lubrifiant est disposée avec une surface d'évaporation de lubrifiant exposée à un courant d'air chaud produit par rotation d'un disque, afin que l'évaporation du lubrifiant contenu dans la source d'évaporation soit accentuée.

3. Appareil selon la revendication 1, dans lequel la source d'évaporation de lubrifiant est placée dans une structure de base de l'appareil qui forme l'enceinte avec un récipient.

4. Appareil selon la revendication 1, dans lequel la source d'évaporation de lubrifiant est formée à la surface d'une paroi interne d'un récipient qui forme l'enceinte avec une structure de base.

5. Appareil selon l'une quelconque des revendications précédentes, caractérisé en ce qu'il comporte en outre:

un dispositif de chauffage de la source d'évaporation de lubrifiant.

6. Appareil selon la revendication 5, comprenant en outre:

un organe de réglage de température, ayant un capteur thermique destiné à régler la température de la source d'évaporation de lubrifiant.

7. Appareil selon la revendication 1, dans lequel la source d'évaporation de lubrifiant est formée sur une surface factice d'un disque de mémoire magnétique, cette surface n'ayant pas de fonction d'enregistrement.

8. Appareil selon la revendication 1, comprenant en outre un organe rotatif disposé afin qu'il soit entraîné en rotation par un dispositif d'entraînement en rotation de l'appareil, la source d'évaporation de lubrifiant étant formée sur une surface de l'organe rotatif.

9. Appareil selon l'une quelconque des revendications précédentes, dans lequel la couche lubrifiante revêtue sur les disques de mémoire magnétique a une structure stratifiée ou est un mélange de lubrifiant d'au moins deux types, et la source d'évaporation de lubrifiant contient celui des lubrifiants de disque qui a la plus grande vitesse d'évaporation.

10. Appareil selon l'une quelconque des revendications précédentes, dans lequel la matière lubrifiante de la source d'évaporation de lubrifiant est revêtue sur une surface d'une plaque de base de la source, cette surface étant rugueuse ou étant une surface poreuse et étant imprégnée de la matière lubrifiante.

11. Appareil selon la revendication 10, dans lequel la surface poreuse a une couche poreuse dont le matériau principal est le verre.

12. Appareil selon la revendication 11, dans lequel la couche poreuse est obtenue par frittage de poudres de verre contenant une résine, revêtue à la surface de la plaque de base de la source.

13. Appareil selon l'une quelconque des revendications précédentes, dans lequel la matière lubrifiante de la source d'évaporation est la même que celle des couches de lubrifiant des disques.

14. Procédé de suppression de la consommation d'une couche lubrifiante formée sur un disque magnétique de mémoire supporté par un dispositif rotatif afin qu'il tourne dans une enceinte hermétique, comprenant:

l'arrangement d'une source d'évaporation du lubrifiant à l'intérieur de l'enceinte hermétique,

l'entraînement en rotation du disque magnétique à l'aide du dispositif d'entraînement en rotation, si bien que la température à l'intérieur de l'enceinte étanche augmente à cause des pertes aérodynamiques,

l'évaporation de la matière lubrifiante de la source d'évaporation de lubrifiant et le remplissage de l'intérieur de l'enceinte hermétique par la vapeur de lubrifiant, et

la suppression de la consommation de la couche de lubrifiant revêtue sur le disque magnétique, l'évaporation de la matière lubrifiante de la couche revêtue sur le disque magnétique étant sensiblement compensée par l'adsorption de vapeur de lubrifiant remplissant l'enceinte hermétique.

Fig. 1

Fig. 2

1

Fig. 3

0 127 444

Fig. 4

(a)

(b)

(c)

(d)

3